# EUROPÄISCHE PATENTSCHRIFT

(11) **EP 1 694 997 B1**
(45) Veröffentlichungstag und Bekanntmachung des Hinweises auf die Patenterteilung: **23.01.2008**
(21) Anmeldenummer: 04803262.7
(22) Anmeldetag: 25.11.2004
(51) Int. Cl.: F16L 25/00, F16L 37/12, F16L 37/133, F16L 37/138, F16L 33/22

(54) **VORRICHTUNG ZUM VERBINDEN MIT EINEM ENDE EINES WELLROHRES**
DEVICE FOR CONNECTION TO AN END OF A CORRUGATED PIPE
DISPOSITIF DE CONNEXION A L'EXTREMITE D'UN TUBE ONDULE

(30) Priorität: 11.12.2003 DE 10357892
(43) Veröffentlichungstag der Anmeldung: 30.08.2006
(73) Patentinhaber: A. RAYMOND ET CIE, 38000 Grenoble (FR)
(72) Erfinder: FEGER, Axel, 79540 Lörrach (DE); KURTH, Martin, 79576 Weil am Rhein-Ötlingen (DE); UTZ, Daniel, 79415 Bad Bellingen (DE); KÜBEL, Matthias, 38116 Braunschweig (DE)
(74) Vertreter: Rüttgers, Joachim
(86) Internationale Anmeldenummer: PCT/EP2004/013353
(87) Internationale Veröffentlichungsnummer: WO 2005/057072

(56) Entgegenhaltungen:
- EP-A- 1 103 752
- WO-A-01/20216
- DE-A1- 4 018 768
- DE-A1- 10 158 114
- US-A- 6 155 610
- US-B1- 6 267 415

## Beschreibung

Die Erfindung betrifft eine Vorrichtung zum Verbinden mit einem Ende eines Wellrohres, nach dem Oberbegriff des Auspruchs 1. Eine solche Vorrichtung ist aus der DE-A-101 58 114 bekannt.

Eine Vorrichtung zum Verbinden mit einem Ende eines Wellrohres ist ferner aus der US-A-5,335,945 bekannt. Diese Vorrichtung verfügt über einen aus einem flexiblen dehnbaren Kunststoffmaterial hergestellten Aufnahmeabschnitt, in den unter radialem Ausdehnen des Aufnahmeabschnittes ein Ende eines Wellrohres bis zum Kontakt mit einem Anschlagflansch einschiebbar ist. Durch die von dem Aufnahmeabschnitt auf das Ende des Wellrohres ausgeübte, radial nach innen wirkende Druckkraft ist das Wellrohr dicht mit der Vorrichtung verbunden.

Zwar ist bei der vorbekannten Vorrichtung ein Ende eines Wellrohres beispielsweise über einen Verbindungsabschnitt der Vorrichtung mit einem Fluidleitungssystem verbindbar, allerdings ist sie auf Grund der entgegegengerichteten Anforderungen, nämlich einer aus Dichtigkeitsgründen möglichst großen Druckkraft und einer aus Handhabungsgründen möglichst geringen Kraft, die zum Einschieben erforderlich ist, für die Praxis nur mit einem nicht immer betriebssicheren Kompromiss auslegbar.

Der Erfindung liegt die Aufgabe zugrunde, eine Vorrichtung zum Verbinden mit einem Ende eines Wellrohres zu schaffen, die sich bei höchster Dichtigkeit durch eine leichte Handhabbarkeit auszeichnet.

Diese Aufgabe wird erfindungsgemäß durch die im Anspruch 1 definierte Vorrichtung gelöst.

Durch das Vorsehen des mit der Aufgleitfläche ausgebildeten Konusabschnittes lässt sich ein Ende eines Wellrohres unter geringfügiger Ausweitung dicht auf den Einfügeabschnitt aufschieben und durch die mit wenigstens einer Eingreifnase ausgebildete Klammeranordnung betriebssicher mit der Vorrichtung verbinden.

Zweckmäßige Weiterbildungen sind Gegenstand der Unteransprüche.

Weitere zweckmäßige Ausgestaltungen und Vorteile der Erfindung sind Gegenstand der nachfolgenden Beschreibung von Ausführungsbeispielen unter Bezug auf die Figuren der Zeichnung. Es zeigen:
Fig. 1 in einer teilgeschnittenen perspektivischen Darstellung ein Ausführungsbeispiel einer Vorrichtung, die nicht im Rahmen der Erfindung liegt,
Fig. 2 in einer teilgeschnittenen perspektivischen Darstellung ein Ausführungsbeispiel der Erfindung und
Fig. 3 in einer teilgeschnittenen perspektivischen Darstellung ein weiteres Ausführungsbeispiel das nicht im Rahmen der Erfindung liegt.

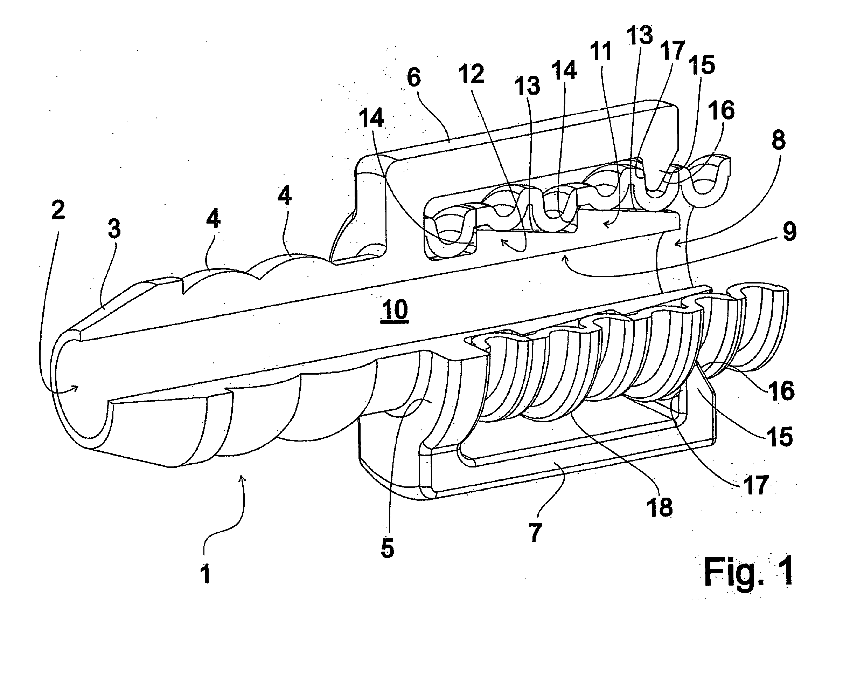

Fig. 1 zeigt in einer teilgeschnittenen perspektivischen Darstellung ein erstes Ausführungsbeispiel einer Vorrichtung. Das Ausführungsbeispiel gemäß Fig. 1 verfügt über einen länglichen Verbindungsabschnitt 1, der an einem Einsteckende 2 mit einem sich in Richtung des Einsteckendes 2 verjüngenden Einsteckkonus 3' ausgebildet ist. Auf der von dem Einsteckende 2 wegweisenden Seite des Einsteckkonus 3 sind eine Anzahl von runditchen Dichtwülsten 4 ausgebildet, die in Längsrichtung des Verbindungsabschnittes 1 dem Verbindungsabschnitt 1 in radialer Richtung einen zwischen einem Maximalwert und einem Minimalwert ondulierenden Querschnitt verleihen. Der Verbindungsabschnitt 1 dient zum Verbinden der Vorrichtung beispielsweise mit einem glattwandigen Schlauch eines in Fig. 1 nicht dargestellten Fluidleitungssystems.

In etwa im Mittenbereich der Vorrichtung gemäß Fig. 1 ist ein Ringbund 5 ausgebildet, der in radialer Richtungen über den maximalen Durchmesser der Dichtwülste 4 vorsteht und damit von der Seite des Einsteckendes 2 einen Anschlag bildet. An der Außenseite des Ringbundes 5 sind bei dem Ausführungsbeispiel gemäß Fig. 1 einander diametral gegenüberliegend ein federnder erster Klammerbügel 6 und ein federnder zweiter Klammerbügel 7 einer Kiammeranordnung angesetzt, die sich in Richtung eines dem Einsteckende 2 gegenüberliegenden Einfügeendes 8 erstrecken. Weiterhin, setzt sich von dem Ringbund 5 in Richtung des Einfügeendes 8 in Verlängerung des Einsteckendes 2 ein länglicher Einfügeabschnitt 9 an. Wie aus Fig. 1 ersichtlich ist, sind die Klammerbügel 6, 7 im wesentlichen parallel und in einem Abstand zu dem Einfügeabschnitt 9 angeordnet. Der Verbindungsabschnitt 1 und der Einfügeabschnitt, 9 umschließen einen Fluidkanal 10, der sich von dem Einsteckende 2 bis zu dem Einfügeende 8 erstreckt.

An der Außenseite des Einfügeabschnittes 9 sind bei dem Ausführungsbeispiel gemäß Fig. 1 benachbart dem Einfügeende 8 ein erster Konusabschnitt 11 sowie zwischen dem ersten Konusabschnitt 11 und dem Ringbund 5 ein zweiter Konusabschnitt 12 ausgebildet Die Konusabschnitte 11, 12 verfügen jeweils über eine in einer Einfügerichtung in von dem Einfügeende 8. relativ flach ansteigende Aufgleitfläche 13 und über einen dem Ringbund 5 zugewandte, sich an die zugehörige Aufgleitfläche 13 anschließende Rückhaltefläche 14. Die Rückhalteflächen 14 sind in Bezug auf die Längsachse gegenüber den Aufgleitflächen 13 erheblich steiler, beispielsweise wie bei dem Ausführungsbeispiel gemäß Fig. 1 rechtwinklig, zu der Längsachse der Vorrichtung angestellt.

Die Klammerbügel 6, 7 weisen an ihren im Bereich des Einfügeendes 8 liegenden freien Enden jeweils eine radial nach innen weisende Eingreifnase 15 auf, die mit.einer dem .Einfügeende 8 zugewandten, von dem Einfügeende 8 in Richtung des Ringbundes 5 radial nach innen angeschrägten Gleitfläche 16 und einer von dem Einfügeende 8 abgewandten, im wesentlichen rechtwinklig zu der Längsachse der Vorrichtung ausgerichteten Anschlagfläche 17 ausgebildet sind.

Schließlich ist in Fig. 1 ein Ende eines Wellrohres 18 dargestellt, dessen Wand in Längsrichtung mit einer Abfolge von radial ausgerichteten Erhöhungen und Vertiefungen ausgebildet ist. Bei der Darstellung gemäß Fig. 1 ist das Ende des Wellrohres 18 über den Einfügeabschnitt 9 bis zum Anschlag an den Ringbund 5 aufgeschoben, wobei die radial der Längsachse des Wellrohres 18 am nächsten kommenden Bereiche der Wand an den Aufgleitflächen 13 der Konusabschnitte 11,12 anliegen und gegenüber dem ursprünglichen Innendurchmesser etwas erweitert sind. Auf Grund der dadurch erzielten radial nach innen wirkenden Kraft ist eine Abdichtung des Wellrohres 18 gegen den Einfügeabschnitt 9 erzielt.

Weiterhin ist aus Fig. 1 ersichtlich, dass die Eingreifnasen 15 unter Anlage der Anschlagflächen 17 an radial nach innen abfallenden Wandabschnitten des Wellrohres 18 eine radial nach außen vorstehende Erhöhung der Wand des Wellrohres 18 hintergreifen, nachdem sie bei dem Einfügen des Wellrohres 18 unter Aufbiegen der federnden Klammerbügel 6, 7 radial nach außen über eine Anzahl von radial nach außen vorstehenden Erhöhungen der Wand des Wellrohres 18 aufgeritten sind. Dadurch ist das Wellrohr 18 gegen ein unbeabsichtigtes Herausziehen aus der Vorrichtung gesichert.

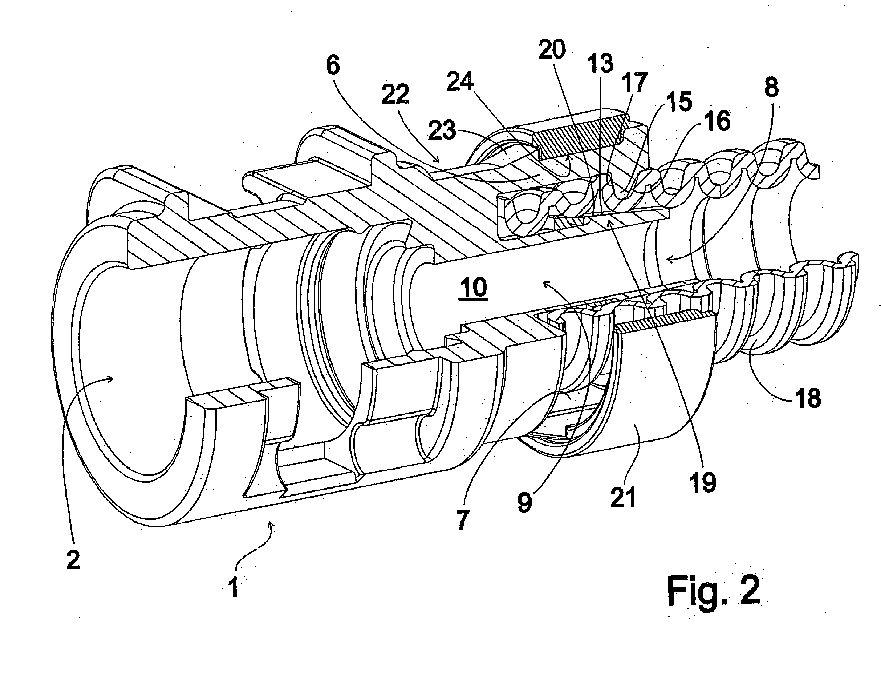

Fig. 2 zeigt in einer teilgeschnittenen perspektivischen Darstellung ein Ausführungsbeispiel der Erfindung, wobei sich bei den Ausführungsbeispielen gemäß Fig. 1 und Fig. 2 entsprechende Elemente mit den gleichen Bezugszeichen versehen und bei Übereinstimmungen im weiteren nicht näher erläutert sind.

Der Verbindungsabschnitt 1 des Ausführungsbeispiels gemäß Fig. 2 ist kanalartig ausgebildet und verfügt über eine Anzahl von innenseitigen sowie außenseitigen Erhebungen und Vertiefungen, die zum Aufnehmen und Arretieren eines in Fig. 2 nicht dargestellten Kupplungsstückes zum Verbinden mit einem Fluidleitungssystem eingerichtet sind.

Der Einfügeabschnitt 9 des Ausführungsbeispiels, gemäß Fig. 2 verfügt über einen einzigen Konusabschnitt 19 mit einer entsprechend dem Ausführungsbeispiel gemäß Fig. 1 geneigten Aufgleitfläche 13. Bei dem in Fig. 2 dargestellten Ausführurigsbeispiel schließt sich an der von dem Einfügeende 8 wegweisenden Seite der Aufgleitfläche 13 einen den Einfügeabschnitt 9 ringförmig umschließenden gummiartigen Dichtkörper 20 an. Dadurch ist bei Aufliegen einer radial nach innen weisenden Erhebungen in der Wand des Weiirohres 18 auf dem Dichtkörper 20 eine besonders gute Abdichtung des Wellrohres 18 erzielt.

Weiterhin ist aus Fig. 2 ersichtlich, dass bei diesem Ausführungsbeispiel die Klammeranordnung über eine ringförmige geschlossene Schiebehülse 21 verfügt, die in axialer Richtung unter Einfedern der Klammerbügel 6, 7 in radialer Richtung aus einer in der Darstellung gemäß Fig. 2 freiliegenden Freigabevertiefung 22 über eine in Richtung des Einfügeendes 8 flach ansteigende Rutschfläche 23 in eine im Bereich der Eingreifnasen 15 in die Klammerbügel 6, 7 eingebrachte Arretiervertiefung 24 verschiebbar ist. Dadurch sind die Klammerbüget 6, 7 gegen ein radiales Ausweiten nach außen gesichert. Die Arretiervertiefung 24 verfügt über im wesentlichen radial ausgerichtete Begrenzungsseiten, so dass die Schiebehülse 21 nach Einrasten in die Arretiervertiefung 24 nur nach gezielter und verhältnismäßig aufwändiger Manipulation aus der Arretiervertiefung, 24 entfernbar ist. Dadurch ist es selbst bei verhältnismäßig starken Bewegungen der des Wellrohres 18 im Bereich des Einfügeendes 8 so gut wie unmöglich, die durch die Eingreifnasen 15 hervorgerufene Arretierung zu überwinden.

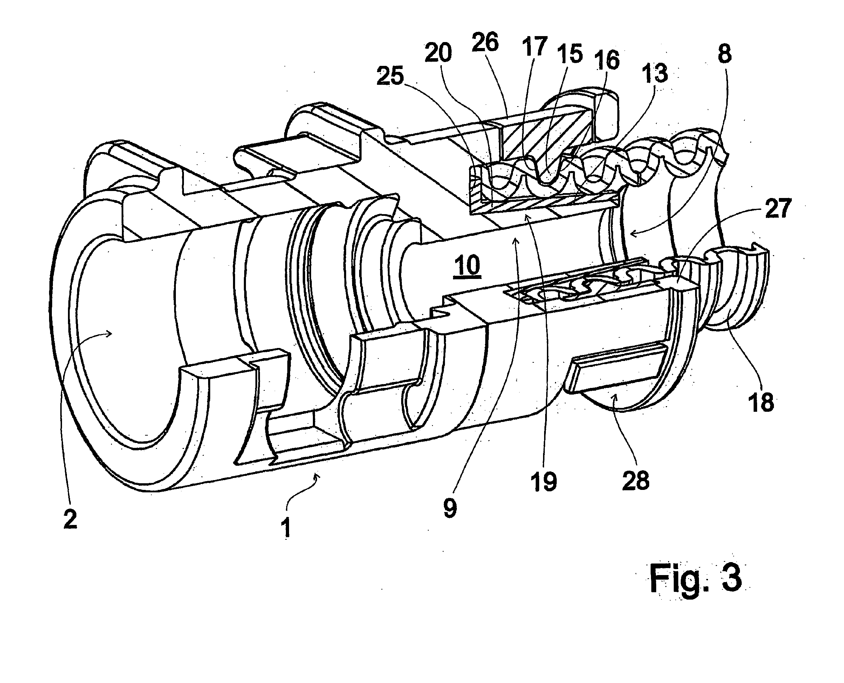

Fig. 3 zeigt in einer teilgeschnittenen perspektivischen Darstellung ein drittes Ausführungsbeispiel, wobei sich bei den Ausführungsbeispielen gemäß Fig. 1, Fig. 2 und Fig. 3 entsprechende Elemente mit den gleichen Bezugszeichen versehen und im weiteren nicht näher erläutert sind. Das Ausführungsbeispiel gemäß Fig. 3 verfügt wie das Ausführungsbeispiel gemäß Fig. 2 über einen Verbindungsabschnitt 1, der kanalartig ausgebildet ist und eine Anzahl von innenseitigen sowie außenseitigen Erhebungen und Vertiefungen aufweist, die zum Aufnehmen und Arretieren eines in Fig. 3 nicht dargestellten Kupptungsstückes zum Verbinden mit einem Fluidleitungssystem eingerichtet sind.

Bei dem Ausführungsbeispiel gemäß. Fig. 3 ist der Einfügeabschnitt 9 über seine gesamte Länge mit einer konischen Aufgleitfläche 13 eines einzigen Konusabschnittes 19 ausgebildet, die in von dem Einfügeende 8 wegweisender Richtung ansteigt und an einer radial ausgerichteten Abschlussfläche 25 endet. Auf die' Aufgleitfläche 13 und den größten Teil der Abschlussfläche 25 ist ein gummiartigen Dichtkörper 20 aufgeschoben, auf dem eine Anzahl von radial nach innen vorstehende Erhebungen der Wand eines Wellrohres 18 zum Aufliegen kommen.

Die Klammeranordnung zum Fixieren des Wellrohres 18 umfasst bei dem Ausführungsbeispiel gemäß Fig. 3 einen C-förmigen Schnappring 26, der entlang einer radial ausgerichteten Einsteckrichtung in eine im Bereich des Einfügeendes 8 vorgesehene, randseitig durch einen Abschlussflansch 27 abgeschlossene Ringaufnahme 28 einfügbar ist. Der Schnappring 26 verfügt radial innenseitig über eine umlaufende Eingreifnase 15, die bei bestimmungsgemäßer Anordnung des Schnappringes 26 über einen verhältnismäßig großen Umfang eine radial nach außen vorstehende Erhebung der Wand des Wellrohres 18 hintergreift. Dadurch ist das Wellrohr 18 gegen unbeabsichtigtes Herausziehen aus der erfindungsgemäßen Vorrichtung gesichert.

## Patentansprüche

1. Vorrichtung, zum Verbinden mit einem Ende eines Wellrohres (18), mit einem in das Ende des Wellrohres (18) einführbaren Einfügeabschnitt (9), der wenigstens einen Konusabschnitt (11, 12, 19) mit einer in einer Einführrichtung von einem Einfügeende (8) wegweisend ansteigenden Aufgleitfläche (13) aufweist, und mit einer in einem radialen Abstand von dem Einfügeabschnitt (9) angeordneten Klammeranordnung, wobei die Klammeranordnung über wenigstens zwei einander gegenüberliegend angeordnete und parallel zu dem Einfügeabschnitt (9) ausgerichtete federnde Klammerbügel (6, 7), an denen an einem freien Ende jeweils eine zwischen zwei Erhebungen des Wellrohres (18) einfügbare Eingreifnase (15) ausgebildet ist, und über eine axial verschiebbare Schiebehülse (21) verfügt, die von einer Freigabestellung in eine die freien Enden der Klammerbügel (6, 7) an einer Bewegung in radialer Richtung nach außen hindernden Blockierstellung bewegbar ist, **dadurch gekennzeichnet, dass** die Schiebehülse (21) in axialer Richtung unter Einfedern der Klammerbügel (6, 7) in radialer Richtung aus einer Freigabevertiefung (22) in eine im Bereich der Eingreifnasen (15) in die Klammerbügel (6, 7) eingebrachte Arretiervertiefung (24) verschiebbar ist.

2. Vorrichtung nach Anspruch 1, **dadurch gekennzeichnet, dass** die Schiebehülse (21) über eine in Richtung des Einfügeendes (8) flach ansteigende Rutschfläche (23) in die Arretiervertiefung (24) verschiebbar ist.

3. Vorrichtung nach Anspruch 1 oder Anspruch 2, **dadurch gekennzeichnet, dass** die Arretiervertiefung (24) über im wesentlichen radial ausgerichtete Begrenzungsseiten verfügt.

4. Vorrichtung nach einem der Ansprüche 1 bis 3, **dadurch gekennzeichnet, dass** eine von dem Einfügeende (8) abgewandte Rückhaltefläche (14) vorhanden ist, die gegenüber der Aufgleitfläche (13) steiler angestellt ist.

5. Vorrichtung nach einem der Ansprüche 1 bis 4, **dadurch gekennzeichnet, dass** der Einfügeabschnitt (9) zwei Konusabschnitte (11, 12) und zwei Rückhalteflächen (14) aufweist.

6. Vorrichtung nach einem der Ansprüche 1 bis 5, **dadurch gekennzeichnet, dass** der Einfügeabschnitt (9) wenigstens abschnittsweise von einer elastischen Dichtmasse (20) umgeben ist

## Claims

1. Device for connecting to an end of a corrugated pipe (18), comprising an inserting section (9) which can be introduced into the end of the corrugated pipe (18), said inserting section (9) having at least one conical section (11, 12, 19) with a ramp surface (13) which rises in a direction facing away from an inserting end (8) in an introducing direction, and comprising a clamping arrangement arranged at a radial separation from the inserting section (9), wherein the clamping arrangement has at least two resilient clamping brackets (6, 7) arranged mutually opposed and oriented parallel to the inserting section (9) on each of which, at a free end, an engaging nose (15) is formed which is insertable between two elevations of the corrugated pipe (18), and has an axially displaceable sliding sleeve (21) which is movable from a releasing position into an arresting position which hinders the free ends of the clamping brackets (6, 7) from moving outwardly in the radial direction, **characterised in that** the sliding sleeve (21) is displaceable in the axial direction, with spring deflection of the clamping brackets (6, 7) in the radial direction, out of a releasing depression (22) into an arresting depression (24) which is introduced into the clamping brackets (6, 7) in the region of the engaging noses (15).

2. Device according to claim 1, **characterised in that** the sliding sleeve (21) is displaceable into the arresting depression (24) over a gliding surface (23) which rises shallowly in the direction of the inserting end (8).

3. Device according to claim 1 or claim 2, **characterised in that** the arresting depression (24) has boundary sides which are oriented substantially radially.

4. Device according to one of the claims 1 to 3, **characterised in that** a retaining surface (14) which faces away from the inserting end (8) and which lies steeper than the ramp surface (13) is provided.

5. Device according to one of the claims 1 to 4, **characterised in that** the inserting section (9) has two conical sections (11, 12) and two retaining surfaces (14).

6. Device according to one of the claims 1 to 5, **characterised in that** the inserting section (9) is surrounded at least partially by an elastic sealing mass (20).

## Revendications

1. Dispositif de réalisation d'une liaison de raccordement à une extrémité d'un tube ondulé (18), comprenant une portion d'emmanchement femelle (9) destinée à être insérée dans l'extrémité du tube ondulé (18), qui comporte au moins une portion conique (11, 12, 19) présentant une surface de glissement (13) s'étendant dans le sens de l'introduction, suivant une pente ascendante dans la direction opposée à l'extrémité d'emmanchement femelle (8), et un agencement d'agrafage disposé à une certaine distance dans le plan radial de la portion d'emmanchement femelle (9), le dispositif d'agrafage se composant en l'occurrence d'au moins deux étriers d'agrafage élastiques (6, 7) respectivement diamétralement opposés et disposés suivant une orientation parallèle à la portion d'emmanchement femelle (9), qui sont respectivement munis, au niveau de leur extrémité libre, d'un ergot d'accrochage (15) destiné à venir s'engager en prise d'encastrement entre deux protubérances du tube ondulé (18) et qui est muni d'une douille coulissante (21) amovible dans le sens axial, qui est destinée à être amenée, d'une position de libération, dans une position de blocage empêchant les extrémités des étriers d'agrafage (6, 7) de se déplacer vers l'extérieur dans le plan radial, **caractérisé en ce que** la douille coulissante (21) peut être transférée, dans le sens axial, en utilisant pour ce faire le cédage élastique dans le plan radial des étriers d'agrafage (6, 7), d'une dépression de libération (22) dans une dépression d'immobilisation en position (24) ménagée dans les étriers d'agrafage (6, 7) dans la zone correspondant aux ergots d'accrochage (15).

2. Dispositif selon la revendication 1, **caractérisé en ce que** la douille coulissante (21) peut être amenée dans sa position d'immobilisation en position (24) en passant au-dessus d'une face de glissement (23) s'étendant suivant une pente plate ascendante dans la direction de l'extrémité d'emmanchement femelle (8).

3. Dispositif selon la revendication 1 ou la revendication 2, **caractérisé en ce que** la dépression d'immobilisation en position (24) comporte des côtés de limitation de gabarit qui sont sensiblement orientés dans le plan radial.

4. Dispositif selon l'une des revendications 1 à 3, **caractérisé par** la présence d'une face de retenue (14) orientée à l'opposé de l'extrémité d'emmanchement femelle (8), qui présente une pente plus raide que celle de la surface de glissement ascendante (13).

5. Dispositif selon l'une des revendications 1 à 4, **caractérisé en ce que** la portion d'emmanchement femelle (9) comporte deux portions coniques (11, 12) et deux faces de retenue (14).

6. Dispositif selon l'une des revendications 1 à 5, **caractérisé en ce que** la portion d'emmanchement femelle (9) est entourée, au moins en partie, par une masse d'étanchéité élastique (20).
